# EUROPEAN PATENT APPLICATION

(11) **EP 2 511 839 A1**
(43) Date of publication of application: **17.10.2012**
(21) Application number: 12161946.4
(22) Date of filing: 29.03.2012
(51) Int. Cl.: G06F 17/30

(54) **Apparatus for providing image service in a mobile terminal, and system and method for providing an image service**

(30) Priority: 13.04.2011 KR 20110034438
(71) Applicant: Samsung Electronics Co., Ltd., Suwon-si, Gyeonggi-do, 443-742 (KR)
(72) Inventor: Paek, Chi-Hyeon, 442-742 Gyeonggi-do (KR); Park, Dae-Beom, 442-742 Gyeonggi-do (KR); Choi, Ung-Sik, 442-742 Gyeonggi-do (KR)
(74) Representative: Hutter, Jacobus Johannes

(57) **Abstract**

A system for providing an image service includes a Social Networking Service (SNS) server for requesting and collecting data from multiple service users connected through the internet; a map server for providing a regional map in association with a Global Positioning System (GPS); a portal server for providing a content search service; and an image server for managing objects provided from each server in association with the servers, and providing objects acquired from each server to a user terminal in association with each other upon receiving a data request from the user terminal.

## Description

### BACKGROUND OF THE INVENTION

### Field of the Invention

The present invention relates to the field image services and in particular to an apparatus, method and system capable of selecting and presenting acquiring real-time images and their associated additional content information from an image server.

### Description of the Related Art

With the advances in technology for mobile devices, currently available mobile devices may be equipped with various multimedia capabilities to enable access to the Internet. In particular, mobile devices equipped with Personal Digital Assistant (PDA) features, such as smart phones, may run various applications.

Many users enjoying the convenience of searching for and acquiring information using a mobile device over mobile wireless environment may want to acquire desired information more quickly and easily, and want to more conveniently utilize the acquired information through a visual check.

However, the currently offered information search services merely allow users to passively check images of specific areas on a one-off basis, and thus may hardly provide user-specific real-time image services.

### SUMMARY OF THE INVENTION

An aspect of an embodiment of the present invention is to allow a user to check captured images of desired areas in real time.

Another aspect of an embodiment of the present invention is to provide improved image data capability by offering a compensation service to image data providers and managing rating histories for the image data providers.

In accordance with one aspect of the present invention, a system for providing an image service is provided. The system includes a Social Networking Service (SNS) server for requesting and collecting data from multiple service users connected through internet network; a map server for providing a regional map in association with a Global Positioning System (GPS); a portal server for providing a content search service; and an image server for managing objects provided from each of the Social Networking, the map, and the portal server , and providing objects acquired from each server to a user terminal upon receiving a data request from the user terminal.

In accordance with another aspect of the present invention, a method for providing an image service is provided. The method includes, upon receiving a request for image data for a specific area from a user terminal, broadcasting the requested data through at least one server linked through a network; searching for and collecting the data broadcasted through each of linked servers; displaying collected objects provided from each server on the user terminal; and collecting a satisfaction for a data provider selected by the user terminal, and storing and managing a rating history for the data provider.

In accordance with further another aspect of the present invention, an apparatus for providing an image service in a mobile terminal is provided. The apparatus includes an image transceiver for receiving a request for image capturing from one of: a data server and a user terminal. connected through a network, and outputting the requested captured image; a controller for requesting a compensation type available when providing image capturing requested by the data server, determining whether to provide an image capturing service depending on the compensation type received from the data server, performing image capturing, and uploading the captured image to the data server in real time; and an image capturer for performing image capturing under control of the controller.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIG. 1 illustrates an image service system according to an embodiment of the present invention;
FIG. 2 illustrates a method for providing an image service according to an embodiment of the present invention;
FIGs. 3A and 3B illustrate screens for providing an image service according to an embodiment of the present invention; and
FIG. 4 illustrates a structure of an apparatus for providing an image service in a mobile terminal according to an embodiment of the present invention.

### DETAILED DESCRIPTION

Exemplary embodiments of the present invention will now be described with reference to the accompanying drawings. In the following description, specific details such as detailed configuration and components are merely provided to assist the overall understanding of the exemplary embodiments of the present invention. It should be apparent to those skilled in the art that various changes and modifications of the embodiments described herein can be made without departing from the scope and spirit of the invention. In addition, descriptions of well-known functions and constructions are omitted for clarity and conciseness.

The present invention is directed to providing real-time image services. More particularly, the present invention provides technology for acquiring objects associated with requested image data from data servers (also known as data service servers) linked to an image server upon receiving a request for image data from a user, providing the acquired objects to a connected user terminal, collecting a satisfaction for a selected image data provider from the user, storing and managing the collected satisfaction as a rating history for the image data provider, and displaying the rating history upon receiving a request for an image service from a user. As a result, a user may easily check captured images of desired areas in real time (i.e., substantially contemporaneously with the data request), and image capturing, in which user feedbacks are reflected, is possible as the user may directly access the image data provider providing the captured images. In addition, the proposed invention includes monitoring and storing satisfactions of data providers providing captured images from a user, and displaying requested image data along with its user rating based on the rating histories for image data providers upon receiving a request for an image service from the user, making it possible for the user to select desired images more quickly and conveniently.

The user terminal (or mobile terminal), to which an embodiment of the present invention is applicable, may include all information communication devices and multimedia devices, such as digital broadcasting terminals, PDAs, smart phones, 3^{rd} generation (3G) terminals (e.g., International Mobile Telecommunication 2000 (IMT-2000) terminals, Wideband Code Division Multiple Access (WCDMA) terminals, Global System for Mobile communication/General Packet Radio Service (GSM/GPRS) terminals, and Universal Mobile Telecommunication Service (UMTS) terminals). However, it will be understood by those of ordinary skill in the art that an embodiment of the present invention may be applied not only to the mobile terminals but also to fixed terminals such as digital TVs and desktop computers.

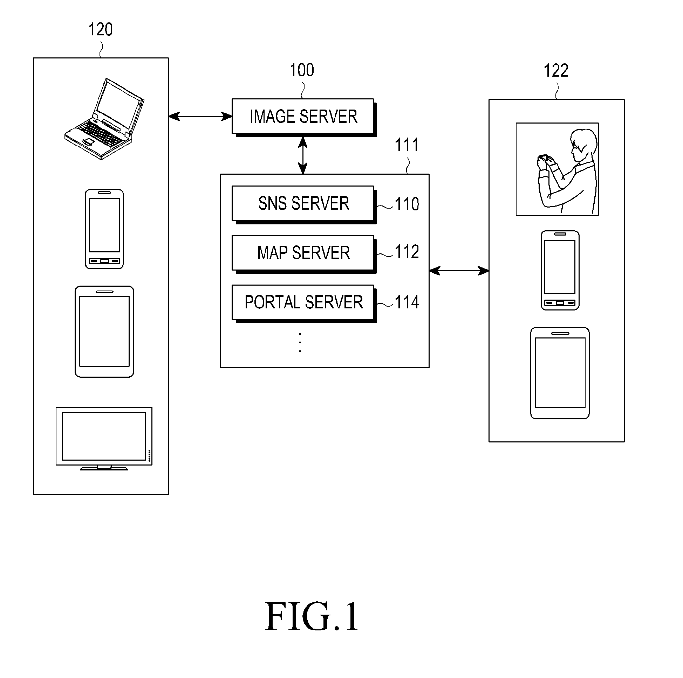

FIG. 1 illustrates an image service system according to an embodiment of the present invention.

Referring to FIG. 1, the image service system (system for providing an image service) according to an embodiment of the present invention includes a data server (also known as a data service server) 111, an image server (also known as an image service server) 100, and data providers (also known as an image data provider) 122. The data server 111 includes a Social Networking Service (SNS) server 110 for requesting and collecting data from multiple service users which are connected over a network (e.g., the Internet), a map server 112 for providing regional maps in association with a Global Positioning System (GPS), and a portal server 114 for providing a content search service. The image server 100 manages objects provided from the servers 110, 112 and 114 associated with the data server 111, and provides data acquired from the servers 110, 112 and 114 to the connected user terminal 120 requesting image data. The data providers 122 are connected to the data server 111 over the network to provide server-specific objects. As shown, the user terminals 120 may be at least one of a laptop computer, a smart phone, a tablet PC or a desktop PC.

Upon receiving a request for specific image data from one of the connected user terminals 120, the image server 100 requests specific data from each of the Social Networking, the map and the portal servers included in the data server 111 according to object formats specific to the linked servers 110, 112 and 114.

The objects specific to the servers 110, 112 and 114 may include at least one data provider that may perform image capturing in an area the user wants, by being connected to the SNS server 110, a map corresponding to the area through the map server 112, and content information corresponding to the specific area through the portal server 114.

Upon receiving a request for image data from at least one of the user terminals 120, the image server 100 broadcasts objects associated with the requested image data through the linked servers 110, 112 and 114. Upon receiving the requested objects, the SNS server 110 collects users desiring to provide an image service from among the users located in the area corresponding to the image data the image server 100 has broadcasted to multiple users having subscribed to the SNS service, lists the multiple users responding to the broadcasted messaged and provides the user list to the image server 100.

In providing the image service, the multiple SNS service users may determine whether to provide an image capturing service depending on the compensation rate (e.g., cash, points, mileage, and coupons) provided from the image server 100.

In providing the image service to the user terminals 120, the image server 100 collects users; satisfaction for the individual image data, and additionally stores and manages rating histories for the quality of the image data. If anyone data provider is selected from a list of data providers capable of image capturing, acquired from the SNS server 110, then the image server 100 displays the requested image data along with a rating history for the selected data provider.

After viewing (or listening to) the image service provided from the image server 100, the user terminal 120, receiving the image data, provides feedback regarding their satisfaction with the data provider providing the image data. The image server 100 provides a compensation service to the data provider depending on the satisfactions of the provided image data.

The image server 100 may display images of the specific area in a list, provide the image list to the user terminals 120, and broadcast images selected from the image list to multiple users.

The image server 100 performs paging between a user and a data provider that the user has selected from the data displayed on the user terminal, and delivers an associated requirement to the selected data provider, or enables direct communication between the user and the data provider.

For example, while captured images are provided from the data provider in real time, the user may provide feedback to the data provider through the image server 100 regarding a requirement (e.g., a direction and a size) for the image to the data provider through the image server 100. Alternatively, a one-to-one communication between the user and the data provider is also possible through a call connection, such as message or voice call, without connection through the image server 100.

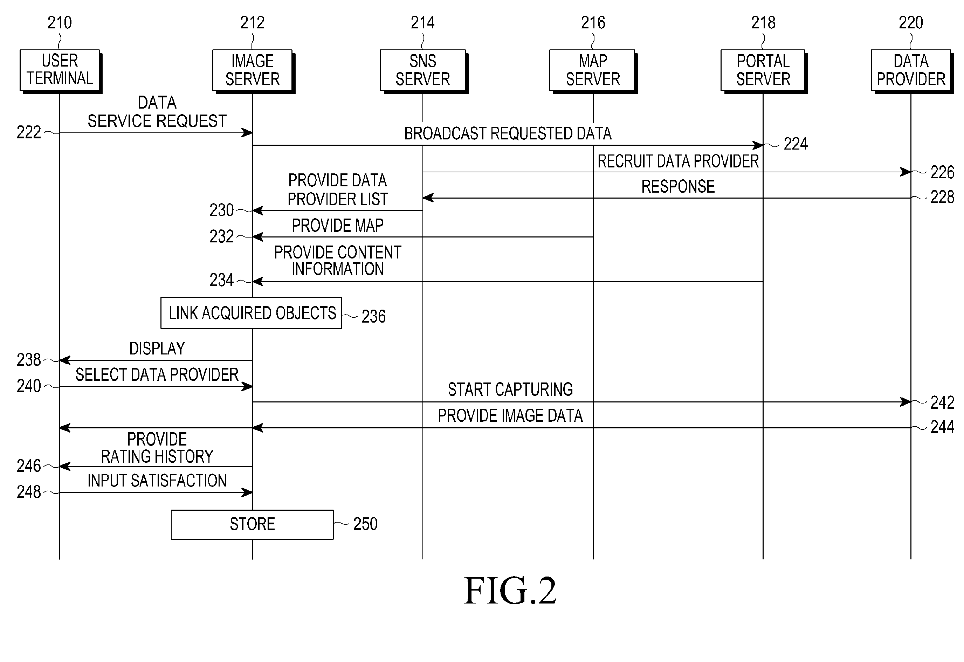

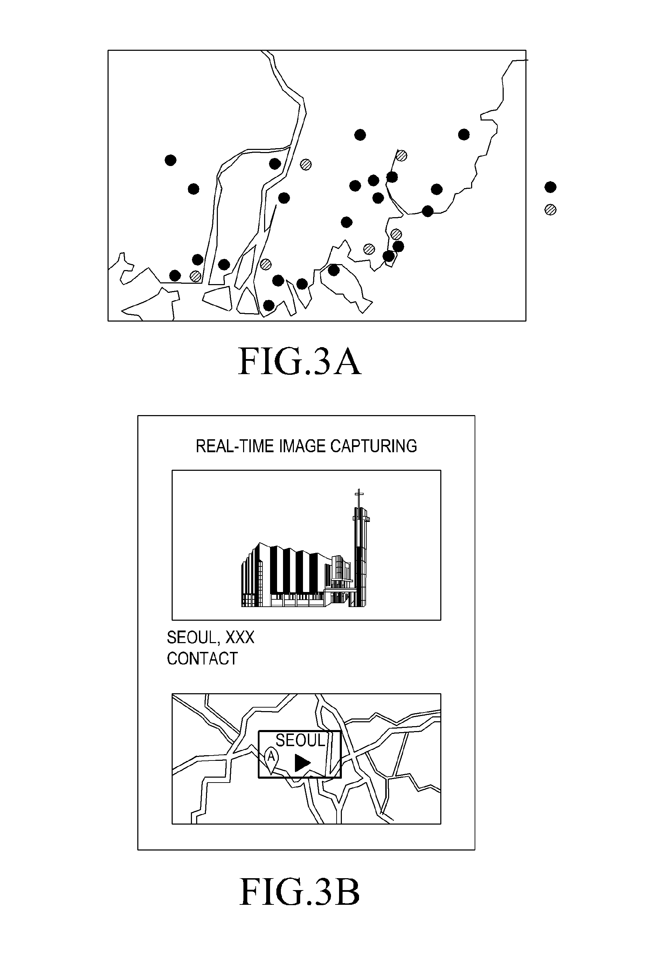

The image service system according to an embodiment of the present invention has been described so far. A method for providing an image service according to an embodiment of the present invention will now be described in detail with reference to FIG. 2 and FIGs. 3A and 3B.

FIG. 2 illustrates a method for providing an image service according to an embodiment of the present invention.

Referring to FIG. 2, upon receiving a request for data of a specific area from a user terminal 210 in step 222, an image server 212 broadcasts the data request through at least one of an SNS server 214, a map server 216 and a portal server 218, which are linked through the network, in step 224.

The SNS server 214 requests and collects data from multiple service users connected through the network (e.g., the Internet). The map server 216 provides a regional map in association with a GPS. The portal server 218 provides a content search service.

As for the data broadcasted by the image server 212, the image server 212 requests specific data from the linked servers 214, 216 and 218 individually according to object formats specific to the servers 214, 216 and 218.

The objects specific to the servers 214, 216 and 218 may include at least one data provider that may perform image capturing in an area, the captured image being one in which the user wants, by being connected to the SNS server 214, a map corresponding to the area through the map server 216, and content information corresponding to the specific area through the portal server 218.

In step 226, upon receiving the data broadcasted from the image server 212, the SNS server 214 recruits users desiring to provide the image service from among a plurality of SNS service users, i.e., users of the SNS server 214, who are located in the area corresponding to the broadcasted request, and provides information about the recruited users to an image data provider 220. Upon receiving a response to the broadcast request from at least one of the recruited users willing to be a data provider in step 228, the SNS server 214 lists the recruited users and provides the list to the image server 212 in step 230.

In providing the image service, the multiple SNS service users recruited as data provides images may determine whether to provide an image capturing service depending on the compensation rate (e.g., cash, points, mileage, and coupons) provided from the image server 212.

The image server 212 links obj ects acquired from the servers 214, 216 and 218 in step 236, and displays the objects on the user terminal 210 in step 238.

FIGs. 3A and 3B illustrate screens for providing an image service according to an embodiment of the present invention. FIG. 3A illustrates a display of a user terminal, on which a specific area is displayed and its user has pointed on a map a data provider capable of real-time image capturing for requested image data in the specific area. Black and gray circles present a reputation of a real-time image data provided by a particular data provider. For example, a black circle indicates the reputation of a real-time image data provided by a corresponding data provider is high, and a gray circle indicates the reputation of a real-time image data provided by a corresponding data provider is normal. If the user selects one of the participating data providers by pointing (e.g., tapping on a screen position associated with the data provider) at the list of participating data providers , then the selected data provider starts image capturing. The captured real-time image data is displayed on the display of the user terminal along with its associated map and content information in the form of FIG. 3B.

Returning to FIG. 2, in step 246, the image server 212 provides a rating history for the data provider selected by the user terminal 210 in step 240. In this way, the image server 212 collects satisfaction data regarding the data providers selected by the user terminal 210, and additionally stores and manages rating histories for the quality of the image data. Thus, it is possible for the user to access desired image data more quickly and conveniently from reliable and/or high quality sources. For example, when one of the multiple data providers shown in FIG. 3A is selected, a rating history for the selected data provider may be displayed on a specific area of the display.

In step 248, after viewing the image service provided from the image server 212, the user terminal 210 provides feedback information regarding a satisfaction of the data provider's service. In step 250, the image server 212 stores the feedback as a rating history for the data provider.

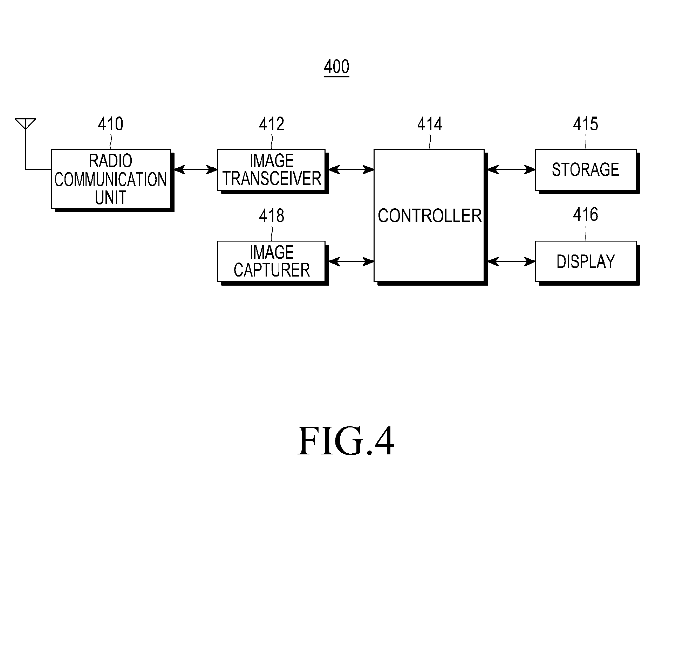

FIG. 4 illustrates an apparatus for providing an image service in a mobile terminal according to an embodiment of the present invention.

Referring to FIG. 4, a mobile terminal 400 includes a radio communication unit 410, an image transceiver 412, a controller 414, a storage 415, a display 416, and an image capturer 418.

The radio communication unit 410 includes a transmitting part (Tx) and a receiving part (Rx), and communicates with a base station using wireless uplink/downlink signals.

In other words, the radio communication unit 410 receives wireless downlink signals using an antenna, generates downlink data by demodulating the wireless downlink signals, and outputs the downlink data to the controller 414. Also, the radio communication unit 410 generates wireless uplink signals by modulating uplink data received from the controller 414, and transmits the generated wireless uplink signals using the antenna. The modulation and demodulation may be performed preferably by Code Division Multiple Access (CDMA), and may also be performed by Frequency Division Multiplexing (FDM) or Time Division Multiplexing (TDM).

The storage 415, in which programs for handling and controlling the controller 414 are stored, stores captured images and their associated data in accordance with an embodiment of the present invention.

The image transceiver 412 receives a request for image capturing from a data server or a user terminal connected, over the network, and outputs the requested captured images.

The controller 414 requests from another server a compensation type available when providing the requested captured images, determines whether to provide an image capturing service depending on the compensation type received from the another server, performs image capturing, and uploads the captured images to the image server in real time.

The controller 414 searches for another user terminal capable of an image capturing service, requests the image capturing service from the another user terminal by attempting a one-to-one communication with the searched for user terminal, displays the requested captured images on the user terminal, and performs image capturing based on the user's requirement for the captured images displayed on the user terminal.

The controller 414 requests a list of other user terminals capable of providing the image capturing service through the server, and requests related captured images by attempting one-to-one communication with one of the other user terminals selected from the requested user terminal list.

The display 416, under control of the controller 414, displays a list of other user terminals capable of providing the image capturing service, captured images, and data associated with the captured images.

The image capturer 418 performs image capturing under control of the controller 414.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

As is apparent from the foregoing description, according to an embodiment of the present invention, a user terminal capable of displaying images using a data server linked to an image server may allow a user to freely check captured images of desired areas in real time.

In addition, optimized image capturing, in which user feedbacks are reflected, is possible by direct connection between an image data requester and a data provider providing captured images through the image server. Besides, satisfactions for captured images from the image data requester are monitored and stored, and the requested image data is displayed along with its user rating based on the rating history of each data provider, making it possible for the user to select desired images more quickly and conveniently.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A system for providing an image service, comprising:
a Social Networking Service (SNS) server (111) requesting and collecting data from plurality of service users (122) connected through a network;
a map server (112) providing a regional map in association with a Global Positioning System (GPS);
a portal server providing a content search service; and
an image server (114) managing objects provided from each of the Social Networking, the map and the portal servers , and providing objects acquired from at least one of the SNS, map and portal servers to a user terminal in response to a received data request from the user terminal (120).

2. The system of claim 1, wherein the image server (114) acquires a list of data providers capable of performing image capturing in a specific area from the SNS server (111), acquires a map corresponding to the specific area from the map server (112), and acquires content information corresponding to the specific area from the portal server (114).

3. The system of claim 1, wherein the image server:
collects a user's satisfaction information for individual data when providing the image service to the user terminal (120),
stores and manages a rating history of the provided image service, and
displays a rating history of a data provider (122) when a corresponding data provider is selected from the data provider list acquired from the SNS server.

4. The system of claim 1, wherein upon receiving a request for specific data from a connected user terminal, the image server requests the specific data from each of the SNS, the map and the portal server according to an obj ect format specific to each of the servers.

5. The system of claim 1, wherein after using the service, the user terminal provides a compensation service corresponding to a quality of the provided data to a data provider connected through the image server.

6. The system of claim 1, wherein the image server displays an image of a specific area on the user terminal in a list, and broadcasts an image selected from the list to the user terminal.

7. The system of claim 1, wherein the image server performs paging between a user and a data provider selected by the user from the data displayed on the user terminal, and delivers a requirement associated with the selected data provider, or enables direct communication between the user and the data provider.

8. The system of claim 1, wherein the data comprises image data for the specific area, the image data being captured in real time.

9. A method for providing an image service, comprising:
upon receiving a request for image data for a specific area from a user terminal, broadcasting (224) the request for image data through at least one server linked through a network;
searching for and collecting image data associated with the request for image data broadcasted through each of the at least one linked servers (230,232,234);
displaying on the user terminal collected objects provided from each of the at least one linked server on the user terminal (238); and
collecting a satisfaction rating for a data provider selected by the user terminal providing the image service, and storing and managing the satisfaction rating as a rating history for the data provider (248).

10. The method of claim 9, further comprising:
displaying the rating history of the selected data provider. (246)

11. The method of claim 9, wherein the data provided from each of the at least one servers comprises:
a list of data providers capable of performing image capturing in a specific area, and
a map and content information for the specific area.

12. The method of claim 9, wherein the image data requested by the user terminal comprises image data for a specific area, and associated content, the image data being captured in real time

13. The method of claim 9, further comprising:
performing paging between a user and a data provider selected by the user terminal, and
delivering a requirement associated with the selected data provider, or enabling direct communication between the user and the selected data provider.

14. An apparatus for providing an image capturing service in a mobile terminal, comprising:
an image transceiver (412) receiving a request for image capturing service and outputting an image captured in response to the image capture service request;
a controller (414):
requesting a compensation type available when providing the image capturing requested by the server,
determining whether to provide an image capturing service depending on the compensation type;
uploading the captured image to a server in real time; and
an image capturer (418) performing image capturing.

15. The apparatus of claim 14, wherein the controller further:
searches for a user terminal capable of the image capturing service,
requests the image capturing service from a user terminal through a one-to-one communication with the searched user terminal,
displays the captured image on the user terminal, and
performs the image capturing service based on a user's requirement for the captured image displayed on the user terminal.

16. The apparatus of claim 14, wherein the controller further receives a list of user terminals capable of providing an image capturing service.
